# EUROPEAN PATENT SPECIFICATION

(11) **EP 0 812 537 B1**
(45) Date of publication and mention of the grant of the patent: **07.02.2001**
(21) Application number: 96500077.1
(22) Date of filing: 14.06.1996
(51) Int. Cl.: A01M 1/00, A01M 7/00

(54) **Hydro-pneumatic spray**
Hydro-pneumatische Spritze
Pulvérisateur hydro-pneumatique

(43) Date of publication of application: 17.12.1997
(73) Proprietor: SOLTEKA, S.L., 25196 Lerida (ES)
(72) Inventor: Eguren Pozo, Roberto c/o, Solteka, S.L., 25196 Lerida (ES)
(74) Representative: Perez Bonal, Bernardo

(56) References cited:
- EP-A- 0 203 659
- US-A- 3 168 238

## Description

### THE OBJECT OF THE INVENTION

The invention is a HYDRO-PNEUMATIC SPRAYER specially designed and made to impel liquids in which fertilisers, insecticides, fungicides, pesticides and cleaning substances for chemical products have been diluted and the fundamental application of which will invariably be foliar, for the protection of plants and woodland.

It is totally clear that the invention is specially intended for agricultural purposes and that outside the treatment of woodland, scrub, vineyards and crops in the open air it will have no specific application, although any other that might occasionally be discovered will not alter the indisputable fact that it is the machine's characteristics which define the invention and not the applications which might be assigned to it in the course of the different uses to which it may be put.

Given that treatment products in general are expensive chemical compounds and that the dosages have to be generous, and leaving aside labour costs and amortization which together with marketing costs, profits and taxes, must make up the real final cost of the product, the special significance in respect of the product's final cost that this type of product represents, is understandable. The product will not have a final sale price in accordance with the concepts which define it, but will enter into market fluctuations in competition with other products of different origins which may not have been subject to the same financial charges.

Throughout the year the farmer's investment and production costs may be attuned to market prices, but this does not happen in the case of plant health treatments where, from the beginning, a good dosage must be decided upon which requires total optimisation. This is the definitive purpose of the invention and its sole and total justification since, as will be described hereinafter, this is not the first time that a turbo atomiser or nebuliser machine nebuliser has been constructed with a specific application to agriculture and, more specifically, to the treatment of woodland, fruit trees, bush crops, vegetables and vineyards.

### BACKGROUND OF THE INVENTION

Atomising consists of dispersing a liquid in the air which is divided into minute drops of water which by virtue of their weight remain in suspension in the air. The flow of liquid forms a cloud, that is to say, it creates the effect of a cloud in suspension, which must not be confused with nebulisation which consists in forming a localised precipitation of water dispersed in the air as a kind of artificial rain.

The oldest apparatus which exists for this purpose is the Venturi, popularly used in perfumery and later industrialised for spraying insecticides by hand by means of a suction force piston pump which expels air through a calibrated nozzle while absorbing the liquid to be nebulised from a tank.

Adopting an ergonomic form for the device and connecting the Venturi to a tank while the impelling fluid is connected to a compressed fluid generator, results in a tool which is universally used for paint gun spraying with liquids or powder.

Practice demonstrated that the Venturi effect could not be relied upon for discharging a dosage of liquid over a great distance, so to this end impulsion techniques have been used which range from direct injection of a liquid to gas compression inside the same tank where the liquid is stored so that the gas acts as a propellant, as in the case of manual or backpack sulphate sprays.

A piece of equipment which features both the Venturi principle and the high pressure injection of liquids dispersed in an air flow which carries the dispersed liquids is considered to belong to the most currently advanced technology and is therefore closer to the optimisation of results in line with established norms. The Venturi principle allows the liquid injected by a high pressure pump, for example, to be dispersed, and the air flow where the liquid is dispersed is obtained by means of a bladed compressor or turbocompressor for the axial generation of fluid.

The prefix "turbo", according to any scientific or technical dictionary, indicates propeller turbine and is used to refer to the coupling of this device with a machine. An atomising turbo machine is, therefore, a machine based on a propeller turbine for impelling the air which will be the medium of conveyance or vehicle for a liquid contained in a tank, in accordance with the universal Venturi principle; and also the necessary assistance of one or more pumps of a high flow rate which discharge from multiple nozzles whose construction and complexity range from the simple "Laval's Chamber" up to the complexity of the ring-shaped distribution chamber with semispherical or parabolic profiles.

Within the field in question, turbine spraying machines for atomising liquids have a broad range of usage within the agricultural sector, and exist in a variety of specifications, capacities and performance over a full range of different power levels.

Within the literature on patents there is the Spanish document corresponding to patent No. 516.212 of the year 1982 in which "certain improvements to agricultural atomisers" are proposed, with the purpose of achieving better usage of their possibilities depending on certain improvements on the novelty of which no opinion will be offered here, even though, as will be seen below, their effectiveness is placed in doubt.

As an addition to the state of the art and without pronouncing on the novelty or the purpose of the invention, we cite Spanish Utility Model No. 203.659, applied for on May 25th, 1974, probably out of date due to the expiry of its legal life, in which an AGRICULTURAL SPRAYER is proposed which, on the basis of a turbine the compression wall of which is radially deflected to eject a flow of a liquid compound through injector nozzles. The remarkable fact is that in this document the fundamental principle covering a turbine-housing-radial deflector is taken as known, and the methods used by the French company BERTHOUD S.A., which figures as the applicant, to vary the pitch of the propeller as set by the blades and thereby attempt to introduce an innovation into the market.

The atomisation of liquids is based on the same principle as their nebulisation, using a flow of air as the vehicle to transport a liquid that is dispersed within the centre of the flow by means of a plurality of injector nozzles. The nebulising process has no end over and above spreading the liquid in the air and projecting it as far as possible, while atomisation attempts to achieve the homogenous spreading of the liquid within the conveyor vehicle or transporter flow, breaking up the drops until they are so microscopic and light that they lose weight and body, allowing them to remain floating in the air.

We have no other data on patent documents over and above those mentioned in the above paragraphs, although we are aware that during the end of nineteen eighty nine and the early years of the nineteen nineties hydro-pneumatic nebulisers and sprays were available in the market through annual international trade fairs, such as those at Zaragoza and Lerida, and commercial fairs such as that of Mollerusa in Lerida (Spain) and those held at Barcelona in the same country.

Of the non - Spanish exhibitors, the Italian brands TIFONE and UNIGREEN may be mentioned, together with the French brands P.P.M., BERTHOUD and NICOLAS, for example, while the Spanish brands GENERAL, ILEMO - HARDI and TEIME SAHER amongst others have a high profile in this market.

It should be recognised that while all of these firms seek an ideal level of optimisation in their machines, they have yet to achieve this. Without exception they are based on an axial compressor supplying the air which acts as the means of conveyance of the liquid which emerges pulverised from a plurality of ejector nozzles and dispersers, these being arranged in the form of a semi - crown around the outlet manifold of the air outlet from the turbine.

The complete system is held in a self - propelled frame or one that is towed by a tractor which also supplies its power; it would not be a novelty to install this equipment on a self - propelled platform, while any resulting advantages would be rather doubtful.

The atomiser nozzles are fed by an equal number of manifolds on which they stand, each being carefully aimed. Each of the manifolds receives a flow of the product to be atomised through a supply pipe from a tank in which the said product is diluted in a liquid, normally water, at the correct proportion or proportions of the product to attain an optimum concentration in an effective dispersion by the suitable means of agitation included to this end in the tank or receptacle.

The form of the nozzle is according to the design specification most suited to the characteristics wished for by the manufacturer of the machine. The same is the case for the high rate of flow pumps which are used to offer a liquid dispersion capacity with the most homogeneous drop size possible, and for this the usage of surfactant agents is normal practice, these having a high capacity to break the surface tension of the liquid in which the product or complex of products to be used is diluted or dispersed.

As may be observed in any fair where machinery of this type is displayed, following the practical realisation of ES. 516.212 and its later certificate of addition, all present a fundamentally uniform constitution and are extremely repetitive in their external appearance, and the fact is that it is infrequent in industry when there are certain output parameters for the design conditions these imply to be avoided.

The axial compressor is formed on the basis of a turbine mounted in a housing on an axis that is concentric to a deflector casing in which the compressed flow is bent around so that it exits radially. Logically and under equal conditions of turbine thrust force, the pressure at the outlet of the flow is inversely proportional to the width of the opening in the outlet manifold, this being circular and concentric to the rotor and which is deformed with an opening to determine with the deflector the flow of air at the outlet which is necessary to throw out the product ejected by the injectors. Due to this the housing, with the lip shaped by a part of the opening of the outlet manifold, may be moved axially to permit it to be closed and thereby increase the pressure, or opened by moving it down, to more or less increase the distance of the conveyor flow from the drops of the product.

There are two dead areas which are produced within the described design, one at the top in which the product must not be loaded as it would fall due to gravity, and another lower one which of necessity points towards the ground. The upper zone is non - productive and becomes empty of a product, and the same occurs with the lower zone, although thus as the flow over the vertical may be incorporated into the working flow without any problems being created, the flow which is directed downwards hits a wall, lower, from which it rebounds and, on being redirected towards the sides, forms terrible turbulence which reduce the final performance. The form in which conventional technique resolves this problem on the basis of Spanish patent documents and the models of the different manufacturers present in this sector, show the difference between what is known and the essential nature of the invention described hereinunder.

Axial compression, conventionally, gives rise to a thrust flow that is in the form of a directed air current around the longitudinal axis of the turbine, and which is therefore affected by turbulence in the form of a continuous spiral until it loses its force in the distance due to simple exhaustion of the initial impulse which decreases in its dynamic strength until it reaches equilibrium with the resistance offered by the atmosphere. In the case in question and according to the technique described, it is wished to eject air radially rather than axially, i.e., that there be a turn of approximately 90° in the flow, this being brought about by the above-mentioned deflector, this giving rise to a circular jet of water which is impelled radially with identical theoretical force around the outlet manifold of the turbo generator element. Due to design requirements the two above-mentioned dead or inoperative zones are produced, zones which, according to current technique, are eliminated by covering the upper and lower parts of the outlet nozzle and making one or more openings in the lower wall of the deflector, through which approximately 25% to 35% of the turbocompressed flow escapes. The problem lies with what to do later with this, given that on occasions it gives rise to perturbation that is not beneficial.

According to the experience of several manufacturers this 25 to 25% of the loss flow is collected and taken behind the deflector to be divided into two sectors which form an angle of approximately 20 to 80° on both sides of the vertical axis and therefore forming two apertures of approximately 60° through which the reflux air flows under pressure from the lower dead zone, plus the compression air flow. These apertures form that which is known as the outlet manifold and as has been said the separation of the lips is variable, the length of the arc or length of the mouth of the outlet nozzle is also variable as is proposed by the Spanish C.A. which completes the ES 516.212, adopting this solution or any of those used by the several manufacturers within this sector.

This starting basis, accepted by all manufacturers, is deceitful as it does not resolve the problem and although it is able to collect part of the flow lost it fails to achieve a significant increase in the total outlet flow, but rather creates additional turbulence which perturbs the performance because it is additional to the one that already exists, i.e., the helicoidal shape of the turbo compressed air due to which there is a reaction of flows and counterflows creating zones of cavitation or lacking in flow, losses of direction and possible cyclonic falls in performance.

It is hard for a non - specialist to form a mental image representing the dynamics of a turbulence which is the result of axial compression at a flow as high as 30 m³ / sec., forced into a horizontal trajectory with a jet in the form of a helicoidal vortex that on losing compression broadens in diameter in the form of a spiral, in that the nucleus narrows until it disappears forming an involuted vacuum that tends towards zero to leave the masses of air immobile when the thrust is lost due to exhaustion of the initial impulse, even though this phenomenon is simple compared to what when there is, as is the case here, an axial derivation which breaks the flow into three parts of which two, theoretically equal, shoot out in a preset angle to the right and left, while the third which is from 25 to 30% of the total, i.e., from 5 to 9 m³ per second, has to be conducted and freed towards the outlets of the main channels.

It is evident that this remnant gives rise to disturbance because the main flow, which already has its helicoidal flow generator broken, jets outward strongly although erratically and once the perturbation produced by the pulverised product injectors takes away its directional nature, this is worsened and increased at the moment when the disturbed reflux recovered from the lower dead zone is added.

Although the points expounded in the above paragraph may appear speculation, in practice this is not the case because the perturbations affecting the flow make equipment of this type less than optimal, this giving rise to the theoretical appreciation that when percentages of outlet flow through the outlet nozzles, then the real case is that in both nozzles, the addition in practice incomprehensibly does not occur within the outlet manifold itself, but rather next to it and once the product has been added to the flow by the injectors, as may be observed in the drawings of the patent document and in the practical embodiments having the prefix of turbo that are offered on the market. Experts are always surprised that when the injectors are included within the flow or conveyor flow without losing the peculiarity of its conical expansion they are affected at this moment by a lateral dispersion produced by the addition of the recovered and disturbed reflux which, at its considerable rate of flow, has a highly negative influence on final performance.

Finally, U.S. Patent 3168238 discloses a chamber in which bottom flow is recovered in a similar way to that proposed herein, namely by redirecting the flow in the lower dead zone in order to prevent excessive turbulence.

But the problem of performance does not only lie in the recovery or not of the flow wasted in the lower turbulence, the basic problem is that of conception. The solution does not lie in the brute force of a turbocompressor with radial deflection through the manifolds of which a flow jets out and in the way of which there are located with a greater or lesser degree of fortune a multiplicity of injectors, the solution lies in slowing down the velocity of movement of the atomised product conveyor flow in a progressive manner such that the atomised drops become weightless just in the mass of vegetation and in the form of a cloud envelope and deposit on the tops and bottoms of leaves due to the difference in static charge that attracts the atomised drops thereby negating the force of gravity and avoiding losses due to precipitation, the first step towards this end being the quantitative equalisation of the outlet flows and as will be seen below the invention proposes four, creating thereby an engineering problem which to date had not been raised meaning that there is no direct previous experience of this due to the fact that this proposal constitutes the essence of the invention. The form of resolving the problem, the means used to attain this end and the new characteristics deriving from all this constitute the object of the invention as it will be described.

### DESCRIPTION OF THE INVENTION

In conformity with its description the invention concerns a HYDRO-PNEUMATIC SPRAYER for liquids which situates the weightless particles of liquid at a distance, forming an enveloping atmosphere around each tree, the liquid being composed of a solution or mixture in water of fertilisers, insecticides, fungicides or simply dispersers and cleansers of insecticides which are not soluble in water.

From the outside it can be appreciated, even without approaching, that a working device constructed in accordance with the invention is differentiated from the others by the fundamental fact that it emits four jets in different directions and according to two axes of symmetry although all four may, and indeed it is desirable that they should, have the same angle relative to the line of the ground.

From the outset an observer might deduce, upon noting the four exit jets, that instead of one turbine the device has two, but this is untrue. The fact is that the invention was developed after exhaustive study of flow rate distribution and turbulence distribution so that in practice the outlet differentiates, directs and uses four flow jets which jointly disperse an identical and predetermined amount of the atomised liquid which is arranged according to the Venturi principle and in a specific way in each outlet of the outlet nozzles. Moreover the atomising mouthpieces are not conventional but elliptical in order to obtain new effects the need for which was highlighted in studies carried out after a treatment when it was observed that some areas of a given leaf receive twice the concentration of others.

It is known that the flow rate increases with the length of the blades, in other words, the greater the diameter of the turbine the greater the flow rate, but there are growth limits due to axial cavitations and because the intermediate area of the blade becomes inoperative when it loses power and effectiveness. One important part of the invention originated in a laboratory study aimed at establishing performance according to area and another originating factor was the study of the distribution and exploitation of performance by area in order to obtain four equal flows which may be directed independently and perform in accordance with the purpose of the invention: i.e., two symmetrical jets plus atomised compound forwardly inclined and another two inclined backwards in such a way that the front ones cover the corresponding tree as they advance parallel to it, while the rear ones cover it for a second time as they move away.

Upon consideration, we see that in fact the same amount of liquid is emitted, and also the same amount of air, but in two bursts, in other words, a double atomisation without increasing consumption, but increasing performance owing to the lapse between emissions, so that the amount dispersed between trees is effectively negligible.

Now we shall see how this result translates into technical terms; in the first place dividing the coaxial flow generated by the blades into two equal parts and then into two more to obtain the four equal outlets of impelling fluid.

With the aim of achieving this innovation we propose as an engineering solution the arrangement as claimed, of two fixed deflecting heads and two simultaneously movable housings. The two deflecting heads partition the flow, but in a manner very differently from traditional techniques, since the traditional head, situated at the bottom, absorbs the flow from the lower dead zone, readmitting it so as to incorporate it in the rear escape collector, hence its name of flow readmission head.

In an entirely different way the flow dividing head carries out the fundamental and beneficial task which distinguishes the invention, dividing the main or primary flow produced by the turbine's axial compression into two flows calculated in terms of the moment of force of the blade and therefore of the impulse which it affords from its centre to its tip in different turns, and later integrating to form two sets of equal final flows. A semicircular nozzle divides the primary flow into two, of which one accounts for 40% of the total while the other accounts for the rest in order to equal the higher flow rate which moves the tip of the blade in relation to its central part.

The flow readmission head features a central aperture in its lower part which reabsorbs a very significant part of the primary flow and which would otherwise be lost through the lower dead zone thus disturbing the carefully studied fluid dynamic. This aperture is symmetrical and has an angle of between 6° and 80° of arc length, but it is inscribed in the head ruling line to form two slopes through which the reflux from the lower dead zone is carried again and divided into two additional equal currents which direct, carry and bring into parallel the flows in a transfer chamber situated behind the head and emerge in blowers added to the rear escape ports where they join the rear conveying flow due to the Venturi effect of the atomised liquid.

In front of the turbine, as is now conventional, there is a fixed blade contrarotor with an opening which may be enlarged or reduced by springs or counterweights. This contrarotor may be manually operated to act on the passage of the blades, and between the flow dividing head and the rear housing there is a main distributor of the ducts which acts as a support for the positioning and fixing of the injectors.

It must be stated that the invention's injectors represent a conceptual innovation: the use of elliptical chamber injectors placed diagonally in order to create surfaces that may be superimposed by overlapping and obtain a flow band or homogeneous jet in a totally different way to the jets obtained from injectors with circular chambers and lineal arrangement which are joined and mixed without overlapping creating undesirable but until now unavoidable denser areas of the atomised product. It might appear even to the expert that this innovation is of little significance, but in fact it is very important because it represents perfection in an area which seems very well exploited technologically, given the long history and number of antecedents, but which in practice only a craftsmanlike attention to detailed improvements, i.e., investing, is able to attain the maximum.

On the basis of the above any expert is able to successfully undertake the object described simply by consulting the techniques known to specialists, although nevertheless if the invention is realised without the inventor taking part, then it will always fall within the scope of the essential nature defined above and which is to be claimed in the final claims. On the other hand and with the aim of supplying more abundant information, sheets of drawings are enclosed which show an example of realisation, which even though it is clear and will be an aid to the comprehension of this invention, does not limit the possibilities of the same in terms of its realisation.

### DESCRIPTION OF THE DRAWINGS

**Figure one** shows a schematic detailed drawing of the arrangement of the elliptical chamber injectors in diagonal position such that when there is homogeneous overlapping, although it is correct that the ejection of the atomised liquid is divergent, it is no less correct that the lineal arrangement of the injectors lies within the sector of an arc.

**Figure two** also presents a detailed comparative diagram showing the conventional arrangement of the circular chamber injectors, hollow cone type, which in divergent conical ejection hit each other, superimpose, do not overlap and overload sections of the flow which as they are heavier than the others fall to earth more quickly, often without touching the trees.

**Figure three** shows a detailed side view of the invention showing the essential characteristics which differentiate it from any known realisation.

**Figure four**, finally, indicates an example of usage in diagrammatic form, showing the performance of the whole in operation.

**Figure five** is a detail of figure three, and shows the double threaded axis forming the variable aperture of nozzles 10 and 11.

It is not considered necessary to supply more graphic documentation enabling readers to form a real idea of the invention.

In the light of the drawings and before going on to a description of the same, references are given for their parts, numbering them and naming them as is shown in detail by the following list:
1.- Tank containing the liquid to be atomised.-
2.- Towing vehicle.-
3.- Arrow showing the direction of movement.-
4.- Width of useful flow to the front and right according to the arrow.-
5.- Width of useful flow to the rear and right.-
6.- Wooded area.-
7.- Enveloping cloud of atomised drops in suspension.-
8.- Master housing.-
9.- Slave housing.-
10.- Front outlet nozzle mouth.-
11.- Rear outlet nozzle mouth.-
12.- Inlet flow.-
13.- Contrarotor with self pitching blades.-
14.- Exterior part of the propeller blade.-
15.- Central part.-
16.- Flow readmission head.-
17.- Flow divider head.-
18.- Power unit.-
19.- Liquid plus additive distributor.-
20.- Nozzle frame support.-
21.- Nozzle frame.-
22.- Atomiser nozzles.-
23.- Central readmission opening in the readmission head using the Venturi effect.-
24.- Reflux in the lower dead zone.-
25.- Lower dead zone.-
26.- Transfer chamber.-
27.- Venturi blowers additional to the rear ports.-
28.- Elliptical injectors arranged diagonally.-
29.- Line of overlap projection.-
30.- Circular injectors.-
31.- Conventional head.-
32.- Double threaded axis.-

### DESCRIPTION OF AN EXAMPLE OF REALISATION

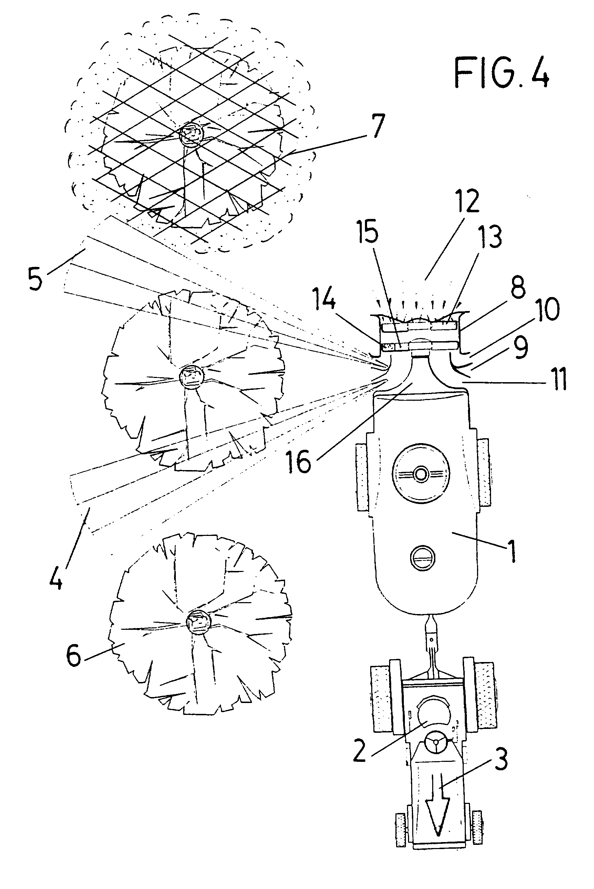

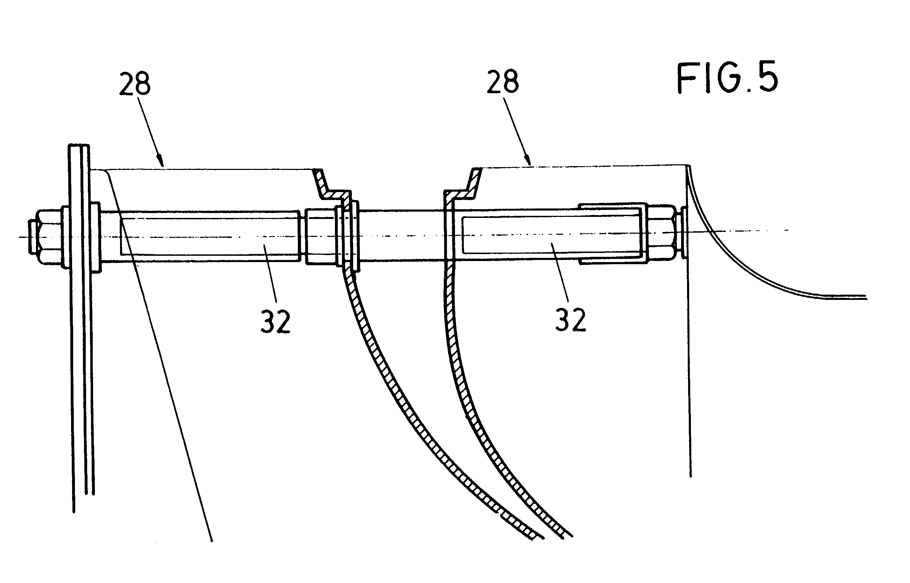

Having seen the background and referring to the references made to the enclosed drawings in a demonstrative manner it may be seen that a conventional tank 1 made of a resin and located within a moving structure suitable for being towed by a towing vehicle 2, transports the liquid to be atomised with the aim of ejecting it over a wooded area 6 or a tree. According to **figure 4** the whole set is shown operating at the edge of a wooded area and for this reason only two sheets of operational flow are shown, one 4 and the other 5, as otherwise there would be four sheets. Nevertheless the figure is sufficiently descriptive to be able to show how during the advance in parallel of the sheets, first one and then immediately afterwards the other, they reach the wooded area and place the necessary and exact dosage over it in a well distributed fashion.

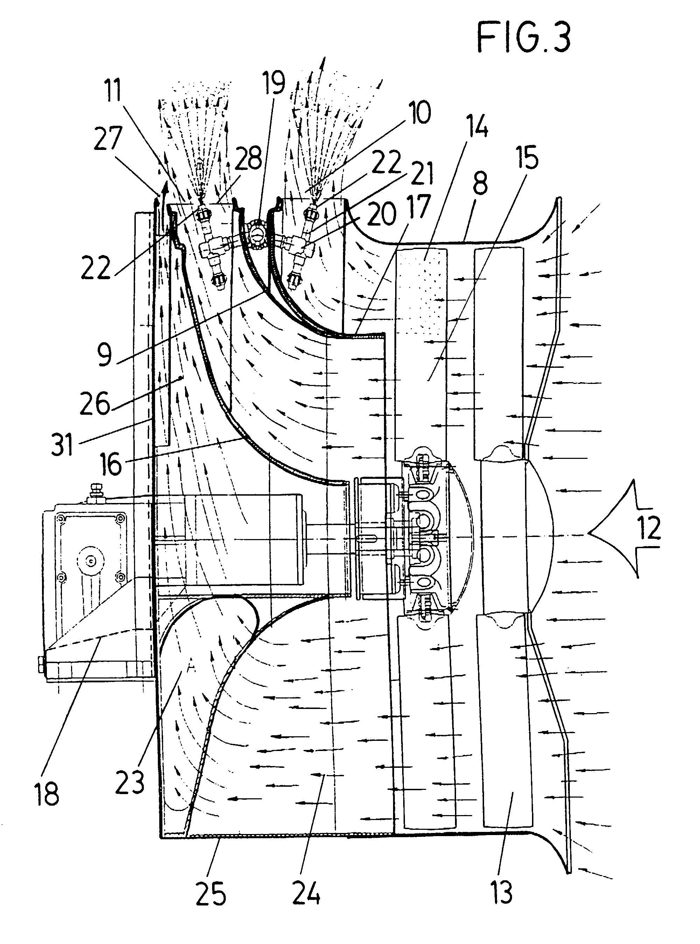

The essence of the invention is clearly shown in **figure 4**, although nevertheless **figure 3** is necessary for a more detailed graphical representation. In the said figure we are able to see how the object of the invention is put into practice dividing the flow compressed by the blades into two parts, one generated by zone 14 of the blade and another moved by the central part 15. The division into the two lateral jets which allow for trees on the right and left to be treated when moving down a central line is conventional although it forms a part of the specifications of the machine and may not be separated when making a description.

With the aim of obtaining this result there are two fixed deflector heads 16 - 17 and two housing 8 - 9 which may be moved axially and simultaneously. Both deflector heads 16 - 17 create partitions in the flow 12, although in highly different forms, as conventional head 31, located at the bottom, absorbs the flow at part 25 of the lower dead zone, and readmitting it to include it, using the Venturi system within the front outlet nozzle manifold, this giving rise to its name of flow readmission head 16.

In a totally different manner flow divider head 17 carries out the fundamental and basic function which determines the invention as it divides the main flow or primary flow 12 originating in the axial compression of the turbine into two flows calculated as functions of the moment of force of the blade and thus of the impulse which it supplies from its centre to its end in several steps and then integrating to find the two sets of the same final flow determined by a semicircular nozzle 17 that divides the primary flow into two, of which one represents approximately 40 % of the total taken off while the other reaches the remaining part with the aim of equalising the greater flow which is moved by the end 14 of the blade respecting the central part 15. The frontal 10 and rear 11 nozzles are inclined at different angles and are arranged in a V position.

The flow readmission head 16 presents a central opening 23 upon its lower surface which reabsorbs a large part of the primary flow which otherwise would be lost through the lower dead zone 25 disturbing the carefully designed fluid dynamics. This opening is symmetrical and has an angle of from 6° to 80° of length of arc, through the other side the opening is formed within the ruling line of head 23 and is shaped to define two sloping sides which redirect the reflux from the lower dead zone 25 dividing it into two additional and equal currents which it directs redirects and brings into parallel in a transfer chamber 26 behind the head 16 and open into two blowers 27 additional to the rear outlet ports 11 to aid by means of a Venturi system the rear atomised liquid conveyor flow 4.

Before the turbine, as is traditional, there is a contrarotor 13 with fixed blades and an opening that may be varied by a spring or self-regulating and progressive counterweight and between the flow dividing head 17 and the rear housing 16 there is the main distributor 19 of the ducts 20 that act as the support for the positioning and fixation of the frame 20 holding the nozzles 22 of the injectors 28. Injectors 28 of nozzles 10 and 11 are positioned in V form and present nozzles that produce a sheet of fluid, depending on the variable power which the towing vehicle may apply to the spray and thereby adjusting, in its connection, the variable opening of the propeller (14) of this. Likewise the deflector (13) is also adjustable in its opening depending on the power which the towing vehicle applies to the spray.

Correlated to the variable opening of the propeller and deflector there is a double threaded axis (32), right and left, which simultaneously forces a greater opening of nozzles (10) and (11) or a greater closing of the same.

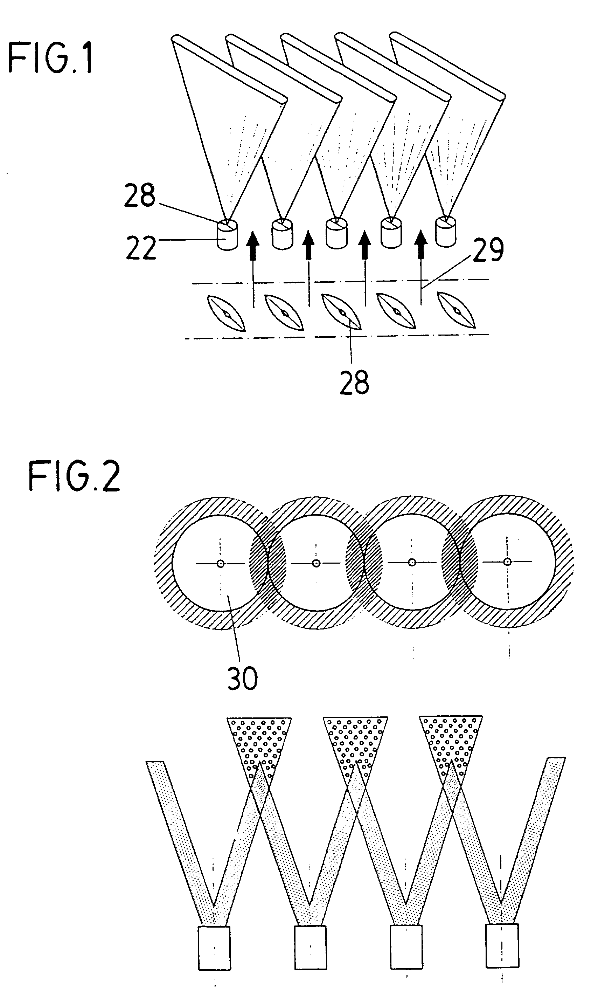

It must be made clear that respecting the injectors of the injection **figures 1 and 2** propose a conceptual innovation, the use of injectors 28 with an elliptical chamber arranged diagonally with the aim of creating overlapping jets 29 and achieving a homogeneous breadth of jet or flow in a manner totally distinct from jets created by injectors with circular chambers 30 and arranged in a line which add up and mix without overlapping creating zones of greater density of atomised product which are completely undesirable but which to date have not been prevented.

It is not necessary to continue giving more explanations as an expert in this field may by following the data supplied execute the object of this invention, although it should be said that if he does not distance himself from the essence described herein he will always fall within the following claims.

## Claims

1. A HYDRO-PNEUMATIC SPRAYER of liquids, of the axial compression type over a deflector bottom that takes the flow of both jets off laterally, incorporating within the centre of the current of each one an atomiser of additive liquid containing proportioned products that is atomised through a set of injectors (22) which eject within the fluid flow that is generated by an axial turbine compressor, and the fluid flow compressed by the blades is divided into two parts, one generated by the exterior part of the propeller blade (14) and the other impelled by the central part (15) with two fixed deflector heads (16-17) and two blower housings (8-9) which may be simultaneously displaced axially, the two deflector heads (16-17) creating partitions in the flow (12), such that the conventional head (31), located at the bottom absorbs the flow of the part (25) of the lower dead zone, readmitting this by Venturi system within frontal outlet manifold nozzle (11), characterised in that it is further equipped with a double threaded axis (32), right and left, to adjust the simultaneous opening of outlet nozzles (10) and (11) depending on the adjustments made to the openings of the propeller (14) and the deflector (13), these being adjustable in turn depending on the power of the towing vehicle to which the spray is to be connected.

2. HYDRO-PNEUMATIC SPRAYER for liquids according to the above claim, characterised in that the flow dividing head (17) divides the main or primary flow (12) produced by the axial compression of the turbine into two flows calculated in terms of the moment of force of the blade and therefore of the impulse which it affords from its centre to its tip in different turns, and later integrating to form two sets of equal final flow; a semicircular nozzle (17) divides the primary flow into two, of which one accounts for 40%-60% of the total suction while the other accounts for the rest in order equal the higher flow rate which is moved by the tip of the blade (14) in relation to its central part (15).

3. HYDRO-PNEUMATIC SPRAYER for liquids according to the above claims, characterised in that the flow readmission head (16) features a central aperture (23) in its lower part which reabsorbs a very significant part of the primary flow in the lower dead zone (25); this aperture is symmetrical and has an angle of between 6° and 80° of arc length, it being inscribed in the head (23) parent line to form two slopes through which the reflux from the lower dead zone (25) is divided into two additional equal currents which direct, carry and bring into parallel the flows in a transfer chamber (26) located behind the head (16) and emerge in two Venturi blowers (27) added to the rear outlet ports (11) where they join the rear conveying flow (4) of the atomised liquid.

4. HYDRO-PNEUMATIC SPRAYER for liquids according to the above claims, characterised in that between the flow dividing head (17) and the rear housing (16) there is a main distributor (19) of the ducts (20) which act as a support for the positioning and fixing of the injectors which have an elliptical chamber (28) placed diagonally which forms surfaces of liquid that may be superimposed by overlapping (29) and a homogeneous flow band or sheet of liquid.

## Patentansprüche

1. Hydropneumatische Flüssigkeitssprühvorrichtung vom Typ axialer Kompression auf einem Deflektorboden, der die Durchflussströmung beider Strähle seitlich leitet, wobei in der Mitte des Stromes dieser beiden jeweils eine Sprühvorrichtung für eine Zusatzflüssigkeit vorgesehen ist, die dosierte Mittel enthält und die über einen Satz Injektoren (22) versprüht wird, die diese ins Innere der durch einen Kompressor mit axialer Turbine erzeugten Flüssigkeitsdurchflussströmung schleudern, wobei die durch die Schaufeln komprimierte Flüssigkeitsdurchflussströmung in zwei Teile aufgeteilt wird, von denen einer vom äusseren Teil der Schaufel (14) des Injektors erzeugt und der andere vom zentralen Teil (15) angestossen wird, mit zwei festen Deflektorköpfen (16-17) und zwei anstossenden Ventilatoranordnungen (8-9), die gleichzeitig axial versetzt werden können, wobei die beiden Deflektorköpfe (16-17) in der Durchflussströmung (12) eine solche Teilung erzeugen, dass der am Boden befindliche herkömmliche Kopf (31) die Durchflussströmung des Bereiches (25) der unteren toten Zone absorbiert und diese über ein im Inneren einer stirnseitigen Sammeldüse (11) befindliches Venturisystem wiederaufnimmt, dadurch gekennzeichnet dass sie ausserdem links und rechts mit einer Doppelgewindeachse (32) ausgestattet ist, um die gleichzeitige Öffnung der Ausgangsdüsen (10) und (11) einzustellen, in Abhängigkeit von den auf die Öffnungen des Injektors (14) und des Deflektors (13) durchgeführten Einstellungen, wobei diese ihrerseits in Abhängigkeit von der Leistung des ziehenden Fahrzeuges, an welches die Sprühvorrichtung angekoppelt wird einstellbar sind.

2. Hydropneumatische Sprühvorrichtung für Flüssigkeiten gemäss dem voranstehenden Anspruch, dadurch gekennzeichnet, dass der Durchflussströmungsteilkopf (17) die durch die axiale Kompression der Turbine erzeugte Haupt- oder Primärdurchflussströmung (12) in zwei aufgrund des Kraftmomentes der Schaufel, und daher des von dessen Mitte zu dessen Ende in verschiedenen Umdrehungen verursachten Impulses, berechnete Durchflussströmungen aufteilt, die anschliessend integriert werden um zwei Systeme mit der gleichen Enddurchflussströmung zu bilden; wobei eine halbkreisförmige Düse (17) die Primärdurchflussströmung in zwei Teile aufteilt, von denen einer 40%-60% der Gesamtaufsaugung entspricht, während der andere dem Rest entspricht, um die grösste vom Schaufelende (14) versetzte Durchflussströmung anzugleichen in Bezug auf den zentralen Teil (15).

3. Hydropneumatische Sprühvorrichtung für Flüssigkeiten gemäss den voranstehenden Ansprüchen, dadurch gekennzeichnet, dass der Kopf (16) zur Wiederaufnahme der Durchflussströmung an seinem Unterteil eine zentrale Öffnung (23) aufweist, die einen bedeutenden Teil der Primärdurchflussströmung im unteren toten Bereich (25) wiederaufnimmt; wobei diese Öffnung symmetrisch ist und einen Winkel zwischen 6° und 80° Bogenlänge aufweist, der in die Mantellinie des Kopfes (23) eintritt, um zwei Gefälle zu bilden, über welche der Rückfluss der unteren toten Zone (25) in zwei gleiche zusätzliche Ströme geteilt wird, die die Flüsse in einer hinter dem Kopf (16) befindlichen Übergabekammer (26) leiten, transportieren und parallel einstellen, und die an zwei anstossenden Venturiventilatoren (27) austreten, die an den hinteren Austrittsöffnungen (11) angeordnet sind, wo sie sich mit der hinteren Durchflussströmung (4) vereinen, welche die versprühte Flüssigkeit transportiert.

4. Hydropneumatische Sprühvorrichtung für Flüssigkeiten gemäss den voranstehenden Ansprüchen, dadurch gekennzeichnet, dass zwischen dem Durchflussströmungsteilkopf (17) und der hinteren Anordnung (16) ein Hauptverteiler (19) der Leitungen (20) angeordnet ist, der nach Art einer Halterung für die Positionierung und die Befestigung der Injektoren wirkt, die eine elliptische, diagonal angeordnete Kammer (28), welche Flüssigkeitsflächen (29) bildet, die durch Überlappung übereinander angeordnet werden können, sowie eine homogene Durchflussbahn oder eine Flüssigkeitsfolie aufweisen.

## Revendications

1. Pulvérisateur hydropneumatique pour des liquides, du type à compression axiale sur un fond déflecteur, dirigeant latéralement le débit des deux jets, en incorporant au centre du courant de chacun d'eux, un pulvérisateur d'un liquide additif contenant des produits dosés et qui est pulvérisé à travers un jeu d'injecteurs (22) qui le lance à l'intérieur du débit de fluide généré par un compresseur à turbine axiale, le débit étant divisé en deux partie de fluide comprimé par les aubes, l'une générée par la partie extérieure de l'aube (14) de l'injecteur et l'autre refoulée par la partie (15) centrale, avec deux têtes de déviation (16-17) fixes et deux ensembles (8-9) de ventilateurs refoulants pouvant être déplacés simultément et axialement, en créant dans le débit (12) -les deux têtes de déviation (16-17)- une telle division, que la tête conventionnelle (31), situé au fond, absorbe le débit de la partie (25) de la zone morte inférieure, en la réadmettant au moyen d'un système Venturi situé à l'intérieur d'une tuyère de collecte frontale (11) de sortie, caractérisé en ce qu'il est equipé de plus, d'un axe (32) à filet à double pas, à droite et à gauche, pour ajuster l'ouverture simultanée des tuyères (10) et (11) de sortie, en dépendant des ajustages effectués sur les ouvertures de l'injecteur (14) et du déflecteur (13), celles-ci étant à leur tour ajustables, en dépendant de la puissance du véhicule remorqueur auquel le pulvérisateur va être connecté.

2. Pulvérisateur hydropneumatique pour des liquides, selon la revendication précédente, caractérisé en ce que la tête (17) de division du débit, divise le débit (12), principal ou primaire, généré par la compression axiale de la turbine, en deux débits calculés sur la base du moment de force de l'aube, et par conséquent l'impulsion fournit depuis son centre jusqu'à son éxtrémité à différentes révolutions, en s'intégrant ensuite pour former deux systèmes ayant un débit final égal; une tuyère (17) demi-circulaire, divise le débit primaire en deux, desquels, l'un élève 40 % - 60 % de l'aspiration totale, tandis que l'autre élève le reste, pour égaliser le plus grand flux de débit déplacé par l'extrémité de l'aube (14), par rapport à sa partie (15) centrale.

3. Pulvérisateur hydropneumatique pour des liquides, selon les revendications précédentes, caractérisé en ce que la tête (16) de réadmission de débit, comporte sur sa partie inférieure, une ouverture (23) centrale, qui réabsorbe une partie très significative du débit primaire et présente un angle allant de 6° à 80° de longitude d'arc, inscrit dans la ligne génératrice de la tête (23), pour conformer deux pentes à travers lesquelles, le reflux de la zone morte (25) inférieure, est divisé en deux courants additionnels égaux, qui dirigent, transportent et mettent en parallèle les flux dans une chambre (26) de transfert, situé derrière la tête (16) et ils émergent dans deux ventilateurs refoulants (27) de type Venturi, ajoutés aux orifices de sortie (11) arrière, où ils s'unissent au débit (4) arrière, qui transporte le liquide pulvérisé.

4. Pulvérisateur hydropneumatique pour des liquides selon les revendications précédentes, caractérisé en ce que, entre la tête (17) de division de débit et l'ensemble (16) arrière, il existe un distributeur (19) principal des conduits (20), qui agit à la manière de support pour le positionnement et la fixation des injecteurs qui ont une chambre (28) elliptique, disposée diagonalement, qui conforme des surfaces de liquides (29) pouvant être superposée par recouvrement, ainsi qu'une bande de débit homogène ou lame de liquide.
